# EUROPÄISCHE PATENTSCHRIFT

(11) **EP 1 932 644 B1**
(45) Veröffentlichungstag und Bekanntmachung des Hinweises auf die Patenterteilung: **11.04.2012**
(21) Anmeldenummer: 06025831.6
(22) Anmeldetag: 13.12.2006
(51) Int. Cl.: B29B 9/14, B01J 2/20, B29C 47/88

(54) **Verfahren und Vorrichtung zum Herstellen von Granulaten**
Method and device for the production of granules
Méthode et dispositif pour la production de granulés

(43) Veröffentlichungstag der Anmeldung: 18.06.2008
(73) Patentinhaber: Amandus Kahl GmbH & Co. KG, 21465 Reinbek (DE)
(72) Erfinder: Franssen, Peter, 7165 AX Rietmolen (NL); Dr, Sitzmann Werner, 21075 Hamburg (DE)
(74) Vertreter: Glawe, Delfs, Moll

(56) Entgegenhaltungen:
- EP-A1- 0 331 207
- EP-A1- 1 136 216
- EP-A2- 0 900 638
- EP-A2- 0 954 989
- DE-A1- 10 032 804

## Beschreibung

Die Erfindung betrifft ein Verfahren gemäß dem Anspruch 1 zum Herstellen von Granulaten aus Naturfasern enthaltenden thermoplastischen Kunststoffen, bei dem die Naturfasern und der Kunststoff gemischt, mit einer Strangpresse extrudiert und anschließend gekühlt werden.

**Bei einem solchen Verfahren (**DE 100 32 804 A1**)** ist **es** bekannt, thermoplastische Kunststoffe mit Fasern als Beischlagstoff zu versetzen, um so ihre Eigenschaften zu verbessern, insbesondere ihre Steifigkeit zu erhöhen gemäß dem Oberbegriff des Anspruchs 1.

So ist es bekannt, die thermoplastischen Kunststoffe mit Glasfasern zu versetzen. In letzter Zeit ist man aber auch dazu übergegangen, statt der Glasfasern Naturfasern zu verwenden. So erreicht man mit einem Anteil von 50 Gew.-% Naturfasern die gleiche Festigkeit und Härte, wie man sie bisher mit 30% Glasfasern erreicht hat. Die Naturfasern stehen dabei als nachwachsender Rohstoff zur Verfügung. Je höher der Anteil dieser Naturfasern ist, umso weniger Kunststoff muss verwendet werden, was im Zeichen steigender Ölpreise große Kostenvorteile mit sich bringt.

Mit Holz versetzte Kunststoffe, sogenannte Wood-Plastic-Composites (WPC) werden insbesondere in Nordamerika im großen Umfang zur Herstellung von Möbeln, Bodenbelägen für Außenanwendungen, wie Veranda, Terrasse und Außentreppe verwendet. Sie ersetzen dabei durch Kesseldruck imprägniertes Echtholz. Der jährliche Umsatz allein in den USA liegt in der Größenordnung von 1 Mio. Tonnen pro Jahr. Auch in Europa nimmt die Verwendung solcher Verbundstoffe stark zu. Der Vorteil gegenüber Echtholz besteht dabei darin, dass Kunststoffe leichter verarbeitet werden können. Die Verarbeitung wird auch nicht durch Qualitätsschwankungen, Staub- und Feuchteprobleme beeinflusst. Die Witterungsbeständigkeit ist gegenüber Vollholzprodukten größer. Gegenüber synthetischen Kunststoffen haben die Verbundstoffe neben der bereits erwähnten besseren Verarbeitbarkeit die Vorteile, dass ihre Haptik wesentlich angenehmer ist als die reiner Kunststoffe, ihres Naturimage und höherer Steifigkeit sowie deutlich geringerer thermischer Ausdehnung.

Zur Herstellung der aus dem mit Fasern versetzten Kunststoff hergestellten Gegenstände wird ein Granulat verwendet. Dieses wird dadurch hergestellt, dass Kunststoff und Fasern vermischt und dann in einem Extruder extrudiert werden, wobei die Temperatur am Ausgang des Extruders so hoch ist, dass der Kunststoff geschmolzen ist. Als Vorrichtungen hierfür werden Doppelwellenextruder, Bussco-Kneter, Banbury-Mischer, FCMs usw. verwendet. Es sind dabei verschiedene Verfahren bekannt.

Bei einem ersten bekannten Verfahren wird das plastische Material durch eine Lochplatte gepresst und zu Strängen verformt. Diese Stränge werden in einem Wasserbehälter gekühlt. Die Stränge werden dann anschließend in einem Strängengranulator geschnitten, so dass das Granulat entsteht. Üblich sind dabei Durchmesser und Längen der einzelnen Teilchen von 4 bis 6mm. Dieses Verfahren wird im größeren Umfang kaum noch benutzt, da es zu viele Probleme mit verschmelzenden Strängen gibt.

Bei einem weiteren Verfahren wird das plastische Material durch eine Abdeckplatte mit einem Schlitz gepresst und dadurch ein Band erzeugt. Das Band wird an einem Wasserbehälter gekühlt und mit einem Bandgranulator zu Granulat geschnitten. Das Granulat ist dabei im Wesentlichen würfelförmig mit Kantenabmessungen von 4 bis 6 mm. Dieses Verfahren wird kaum noch benutzt. Es treten Kühlprobleme des Bandes, zu geringe Durchsätze des Extruders, Abrieb der Ecken der Würfel bei pneumatischem Transport, wodurch viel Staub entsteht, und geringe Transportleistungen beim pneumatischen Transport auf.

Die beiden vorgenannten Verfahren haben dabei noch den Nachteil, dass der Strang bzw. das Band häufig bricht, so dass nach jedem Bruch der Strang bzw. das Band wieder von Hand in den Granulator eingespannt werden muss, was zu Unterbrechungen in der Produktion führt. Stränge oder Bänder haben auch häufig eine raue Oberfläche, so dass viel Wasser daran haftet. Das entsprechende nasse Granulat bringt dann Trocknungsprobleme mit sich. Ein weiterer Nachteil besteht darin, dass die Granuliermesser schnell stumpf werden.

Bei einem weiteren vorbekannten Verfahren wird das plastische Material durch ein Lochblech gepresst. Das austretende Material wird durch zentrisch oder exzentrisch drehende Messer geschnitten. Das geschnittene Material wird ins Wasser geschleudert und dort gekühlt. Dieses Verfahren wird für Leistungen von weniger als 2000 kg pro Stunde verwendet. Große Nachteile dieses Verfahrens sind einerseits das Zusammenschmelzen des plastischen Materials auf dem Lochblech während der Granulierung und das Verkleben des Granulats auf dem Weg zum Wasserbehälter.

Bei der Unterwassergranulierung wird das plastische Material durch ein Lochblech gepresst. Das austretende Material wird durch ein gegen das Lochblech drückendes zentrisch drehendes Messer abgeschnitten. Gegen die Außenseite des Lochblechs strömt Wasser. Dieses Wasser kühlt das durch das Lochblech austretende Material und transportiert das Material zu einer Zentrifuge. Mit Verfahren dieser Art wurden Leistungen von mehr als 25 Tonnen pro Stunde realisiert. Es ist das im Moment am meisten genutzte Verfahren.

Bei den beiden zuletzt genannten Verfahren treten folgende Probleme auf. Durch die häufig zu schnelle Kühlung des Granulats im Kühlwasser entstehen Trocknungsprobleme. Granuliermesser werden schnell stumpf. Sind in dem Kunststoff auch Mineralstoffe/Pigmente eingebettet, so werden diese bei der Granulierung zum Teil frei und verschmutzen das Kühlwasser, das deswegen häufiger erneuert werden muss.

Schließlich tritt das Problem auf, dass die Bohrungen in dem Lochblech, wenn ein solches verwendet wird, verstopfen. Dadurch sinkt die Leistung der Strangpresse und die Temperatur steigt in Folge der zunehmenden Reibung stark an, was zu Zersetzung Anlass geben kann.

Die Aufgabe der Erfindung besteht in der Schaffung eines Verfahrens der eingangs genannten Art, mit dem auf verbesserte Weise das Granulat hergestellt werden kann.

Die erfindungsgemäße Lösung besteht darin, dass das extrudierte Material lediglich auf eine Temperatur gekühlt wird, bei der es zu erhärten beginnt, dass es anschließend in einer Pelletpresse, in der es durch auf einer Matrize abrollende Rollen durch Bohrungen der Matrize gepresst wird, zu Pellets verarbeitet wird.

Es wird also ein zweistufiger Vorgang gewählt. Es werden zunächst im Wesentlichen wie bei vorbekannten Verfahren Stränge oder grobstückiges Material in einem Extruder hergestellt, die beziehungsweise das aber nicht durch Wasser auf eine gewünschte Endtemperatur gekühlt werden. Vielmehr werden die Stränge oder das grobstückige Material lediglich soweit gekühlt, dass sie beziehungsweise es zu erhärten beginnen. Dies kann insbesondere durch Luftkühlung auf einem Kühlband erfolgen. Anschließend wird dann das Material in einer Pelletpresse, in der es durch auf einer Matrize abrollende Rollen durch Bohrungen der Matrize gepresst wird, zu Pellets verarbeitet. Die Probleme, dass die gesamte Kühlung durch das Wasserbad erfolgen muss (zu schnelle Kühlung, zu hoher Kühlwasserbedarf) werden also vermieden. Es hat sich gezeigt, dass durch diesen zweistufigen Vorgang ungefähr die doppelte Menge im vergleich zu einem Fall verarbeitet werden kann, wo nur eine Strangpresse verwendet wird.

Zweckmäßigerweise wird vorgesehen, dass das Material den Extruder mit einer Temperatur von 160 bis 220°C, insbesondere 180 bis 200°C verlässt. Das Material wird dann vorteilhafterweise nach dem Austreten aus dem Extruder auf eine Temperatur von 120 bis 140°C, insbesondere 130°C gekühlt.

Als thermoplastischer Kunststoff können einerseits Kunststoffe der petrochemischen Industrie wie Polypropylen, Polyethylen, insbesondere Polyethylen hoher Dichte, Polyvinylchlorid, Nylon , ABS (Acrylnitril-Butadien-Styrol-Copolymerisat) usw. verwendet werden. Andererseits können aber auch Kunststoffe aus nachwachsenden Rohstoffen wie z.B. Poly-Lactid oder PHB verwendet werden. Auch Wachse oder Kombinationen der obigen Materialien können verwendet werden. Die Wahl des Kunststoffs wird dabei vom Verwendungszweck abhängen. Selbstverständlich wird man für Außenanwendungen dabei keine biologisch abbaubaren oder wasserlöslichen Kunststoffe verwenden. Andererseits wird man für gewisse Anwendungen biologisch abbaubare Kunststoffe verwenden, wobei dann auch die organischen Faserstoffe aus nachwachsenden Quellen verrotten.

Vorteilhafterweise weist das Rohmaterial 20 bis 80 Gew.-% der Fasern auf. Insbesondere hat es sich als zweckmäßig erwiesen, dass das Rohmaterial 40 bis 60 Gew.-% der Fasern enthält. Damit besteht immer noch ungefähr die Hälfte des Materials aus nachwachsenden Rohstoffen, wobei dieser Anteil natürlich noch größer ist, wenn Kunststoffe aus nachwachsenden Rohstoffen verwendet werden. Das Produkt ist daher ökologisch sehr vorteilhaft.

Als Fasermaterial kann Holz in Form von Sägespänen oder Hobelspänen verwendet werden. Als besonders vorteilhaft hat sich hier Hanf als Fasermaterial erwiesen. Stroh ist ebenso wie Ramie (eine Bast-Faser aus den Stängeln der Ramie-Pflanzen Boehmeria nivea und Boehmeria tana) gut geeignet. Dies ist auch für und Kenaf (Fasern der ostindischen Pflanze Hibiscus cannabinus, einer einjährigen 3-4 m hohen Faserpflanze) der Fall.

Eine Vorrichtung zur Durchführung des Verfahrens zeichnet sich dadurch aus, dass sie einen Extruder, ein sich daran anschließendes Kühlaggregat, zum Beispiel ein Kühlband und eine sich daran anschließende Pelletpresse aufweist. Extruder, mit denen man Materialien extrudieren kann, sind ebenso wie Pelletpressen dem Fachmann bekannt und brauchen daher hier nicht weiter erläutert zu werden.

In der Pelletpresse rollen auf einer Matrize sogenannte Kollerrollen ab und pressen das auf die Matrize aufgebrachte Material durch Bohrungen der Matrize. Durch die Reibung des Materials mit den Wänden der Matrizenbohrungen wird das Material dabei verdichtet und möglicherweise auch beträchtlich erwärmt. Falls die Erwärmung unerwünscht ist, kann man die Pelletpresse kühlen, z.B. durch Einblasen von Kühlluft. Als Matrizen kommen dabei sowohl Flachmatrizen, auf denen die Kollerrollen abrollen, als auch Ringmatrizen in Frage, innerhalb derer die Kollerrollen abrollen und das Material nach außen drücken.

Zweckmäßigerweise ist das Kühlaggregat mit Einrichtungen zum Zuführen von Kühlluft versehen.

Es wurden mit dem erfindungsgemäßen Verfahren und der erfindungsgemäßen Vorrichtung Versuche und vergleichsversuche mit anderen Materialien durchgeführt. Sind dem Kunststoff Pigmente zugeführt, so kann das erfindungsgemäße Verfahren vorteilhafterweise für einen Füllungsgrad von 20 bis 80 % an Pigmenten durchgeführt werden. Die Matrizenbohrungen haben dabei zweckmäßigerweise einen Durchmesser von 1,2 bis 6 mm. Für Naturfasern verwendet man dabei Matrizenbohrungen mit einer größeren Minimalgröße. Versetzt man Polypropylen oder Poly-Lactid **(PLA, aus Milchsäure abgeleitetes biologisch abbaubares Polymer**) mit Naturfasern, so verwendet man bei einem Füllungsgrad von 20 bis 80 % Naturfasern zweckmäßigerweise Matrizenlöcher von 4 bis 6 mm.

Führt man Granulierung ohne Beischlagstoffe durch, so hat sich für Polypropylen und Polyethylen hoher Dichte ein Durchmesser der Matrizenbohrungen von 4 bis 11 mm als besonders vorteilhaft erwiesen.

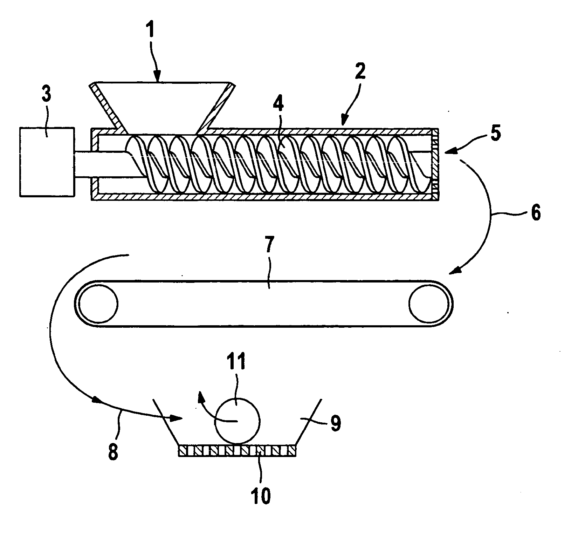

Die Erfindung wird im Folgenden anhand einer vorteilhaften Ausführungsform unter Bezugnahme auf die beigefügte Zeichnung beschrieben, die den prinzipiellen Aufbau einer Vorrichtung der Erfindung zeigt.

Durch eine Zufuhröffnung 1 wird das Rohmaterial, d.h. Kunststoff mit Beischlagstoffen in Form von Naturfasern, in einen zylinderförmigen Extruder 2 eingegeben, der eine durch einen Motor 3 angetriebene Förderschnecke 4 aufweist, die das Material gegen und durch eine Lochplatte 5 drückt. Das Material verlässt die Lochplatte in Richtung des Pfeils 6 in Form von Strängen oder als grobstückiges Material, die bzw. das auf einem Kühlband 7 gekühlt werden. Verlässt das Material den Extruder 2 mit einer Temperatur von 180 bis 200°C, wird es auf dem Kühlband 7 auf eine Temperatur von ungefähr 130°C abgekühlt. Anschließend gelangt das Material dann in Richtung des Pfeiles 8 in eine Pelletpresse 9, in der auf einer mit Bohrungen versehenen Matrize 10 Kollerrollen 11 abrollen und das Material durch die Matrize 10 drücken.

## Patentansprüche

1. Verfahren zum Herstellen von Granulaten aus Naturfasern enthaltenden thermoplastischen Kunststoffen, bei dem die Naturfasern und der Kunststoff gemischt, mit einem Extruder extrudiert und anschließend gekühlt werden, **dadurch gekennzeichnet, dass** das extrudierte Material lediglich auf eine Temperatur gekühlt wird, bei der es zu erhärten beginnt, und dass es anschließend mit einer Pelletpresse, in der es durch auf einer Matrize abrollende Rollen durch Bohrungen der Matrize gepresst wird, zu Pellets verarbeitet wird.

2. Verfahren nach Anspruch 1, **dadurch gekennzeichnet, dass** das extrudierte Material mit einem Kühlaggregat, insbesondere einem Kühlband auf die Temperatur gekühlt wird, bei der es zu erhärten beginnt.

3. Verfahren nach Anspruch 1 oder 2, **dadurch gekennzeichnet, dass** das Material nach dem Austreten aus dem Extruder mit Luft gekühlt wird

4. Verfahren nach einem der Ansprüche 1 bis 3, **dadurch gekennzeichnet, dass** das Material den Extruder mit einer Temperatur von 160 bis 220° C verlässt.

5. Verfahren nach einem der Ansprüche 1 bis 4, **dadurch gekennzeichnet, dass** das Material den Extruder mit einer Temperatur von 180 bis 200° C verlässt.

6. Verfahren nach einem der Ansprüche 1 bis 5, **dadurch gekennzeichnet, dass** das Material nach dem Austreten aus dem Extruder auf eine Temperatur von 120 bis 140° C gekühlt wird.

7. Verfahren nach einem der Ansprüche 1 bis 6, **dadurch gekennzeichnet, dass** das Material nach dem Austreten aus dem Extruder auf eine Temperatur von 130° C gekühlt wird.

8. Verfahren nach einem der Ansprüche 1 bis 7, **dadurch gekennzeichnet, dass** als thermoplastischer Kunststoff Polypropylen (PP) verwendet wird.

9. Verfahren nach einem der Ansprüche 1 bis 8, **dadurch gekennzeichnet, dass** als thermoplastischer Kunststoff Polyethylen (PE), insbesondere Polyethylen hoher Dichte (HDPE) verwendet wird.

10. Verfahren nach einem der Ansprüche 1 bis 9, **dadurch gekennzeichnet, dass** als thermoplastischer Kunststoff Polyvinylchlorid (PVC) verwendet wird.

11. Verfahren nach einem der Ansprüche 1 bis 10, **dadurch gekennzeichnet, dass** als thermoplastischer Kunststoff Nylon verwendet wird.

12. Verfahren nach einem der Ansprüche 1 bis 11, **dadurch gekennzeichnet, dass** als thermoplastischer Kunststoff **Acrylnitril-Butadien-Styrol-Copolymerisat** (ABS) verwendet wird.

13. Verfahren nach einem der Ansprüche 1 bis 12, **dadurch gekennzeichnet, dass** als thermoplastischer Kunststoff Poly-Lactid (PLA) verwendet wird.

14. Verfahren nach einem der Ansprüche 1 bis 13, **dadurch gekennzeichnet, dass** das Rohmaterial 20 bis 80 Gewichtsprozent Fasern enthält.

15. Verfahren nach einem der Ansprüche 1 bis 14, **dadurch gekennzeichnet, dass** das Rohmaterial 40 bis 60 Gewichtsprozente Fasern enthält.

16. Verfahren nach einem der Ansprüche 1 bis 15, **dadurch gekennzeichnet, dass** als Fasermaterial Holz in Form von Sägespänen oder Hobelspänen verwendet wird.

17. Verfahren nach einem der Ansprüche 1 bis 15, **dadurch gekennzeichnet, dass** als Fasermaterial Hanf verwendet wird.

18. Verfahren nach einem der Ansprüche 1 bis 16, **dadurch gekennzeichnet, dass** als Fasermaterial Stroh verwendet wird.

19. Verfahren nach einem der Ansprüche 1 bis 17, **dadurch gekennzeichnet, dass** als Fasermaterial Ramie oder Kenaf verwendet wird.

20. Verfahren nach einem der Ansprüche 1 bis 19, **dadurch gekennzeichnet, dass** die Pellets im Wasserbad gekühlt werden.

## Claims

1. Process for producing pellets made of thermoplastics comprising natural fibres, by mixing the natural fibres and the plastic, extruding these in an extruder and then cooling the same, **characterized in that** the extruded material is cooled only to a temperature at which it begins to harden, and that it is then processed to give pellets in a pelletizing press in which rollers rolling on a die force it through holes in the die.

2. Process according to Claim 1, **characterized in that** a cooling assembly, in particular a cooling belt, is used to cool the extruded material to the temperature at which it begins to harden.

3. Process according to Claim 1 or 2, **characterized in that** after the material emerges from the extruder it is cooled by air.

4. Process according to any of Claims 1 to 3, **characterized in that** the temperature at which the material leaves the extruder is from 160 to 220°C.

5. Process according to any of Claims 1 to 4, **characterized in that** the temperature at which the material leaves the extruder is from 180 to 200°C.

6. Process according to any of Claims 1 to 5, **characterized in that** after the material emerges from the extruder it is cooled to a temperature of from 120 to 140°C.

7. Process according to any of Claims 1 to 6, **characterized in that** after the material emerges from the extruder it is cooled to a temperature of 130°C.

8. Process according to any of Claims 1 to 7, **characterized in that** polypropylene (PP) is used as thermoplastic.

9. Process according to any of Claims 1 to 8, **characterized in that** polyethylene (PE), in particular high-density polyethylene (HDPE), is used as thermoplastic.

10. Process according to any of Claims 1 to 9, **characterized in that** polyvinyl chloride (PVC) is used as thermoplastic.

11. Process according to any of Claims 1 to 10, **characterized in that** nylon is used as thermoplastic.

12. Process according to any of Claims 1 to 11, **characterized in that** acrylonitrile-butadienestyrene copolymer (ABS) is used as thermoplastic.

13. Process according to any of Claims 1 to 12, **characterized in that** polylactide (PLA) is used as thermoplastic.

14. Process according to any of Claims 1 to 13, **characterized in that** the raw material comprises from 20 to 80% by weight of fibres.

15. Process according to any of Claims 1 to 14, **characterized in that** the raw material comprises from 40 to 60% by weight of fibres.

16. Process according to any of Claims 1 to 15, **characterized in that** wood in the form of sawdust or shavings is used as fibre material.

17. Process according to any of Claims 1 to 15, **characterized in that** hemp is used as fibre material.

18. Process according to any of Claims 1 to 16, **characterized in that** straw is used as fibre material.

19. Process according to any of Claims 1 to 17, **characterized in that** ramie or kenaf is used as fibre material.

20. Process according to any of Claims 1 to 19, **characterized in that** the pellets are cooled in a water bath.

## Revendications

1. Procédé de fabrication de granulés de matériaux synthétiques thermoplastiques contenant des fibres naturelles, dans lequel les fibres naturelles et le matériau synthétique sont mélangés, extrudés au moyen d'une extrudeuse et ensuite refroidis, **caractérisé en ce que** le matériau extrudé est juste refroidi à une température à laquelle il commence à durcir et **en ce qu'**il est ensuite transformé en pastilles au moyen d'une presse de pastillage dans laquelle il est comprimé à travers les trous d'une matrice par des cylindres roulant sur la matrice.

2. Procédé selon la revendication 1, **caractérisé en ce que** le matériau extrudé est refroidi au moyen d'un système de refroidissement, en particulier une bande transporteuse refroidisseuse, à la température à laquelle il commence à durcir.

3. Procédé selon la revendication 1 ou la revendication 2, **caractérisé en ce que** le matériau est refroidi à l'air après être sorti de l'extrudeuse.

4. Procédé selon l'une des revendications 1 à 3, **caractérisé en ce que** le matériau sort de l'extrudeuse à une température dans la plage de 160 à 220°C.

5. Procédé selon l'une des revendications 1 à 4, **caractérisé en ce que** le matériau sort de l'extrudeuse à une température dans la plage de 180 à 200°C.

6. Procédé selon l'une des revendications 1 à 5, **caractérisé en ce que**, après être sorti de l'extrudeuse, le matériau est refroidi à une température dans la plage de 120 à 140°C.

7. Procédé selon l'une des revendications 1 à 6, **caractérisé en ce que**, après être sorti de l'extrudeuse, le matériau est refroidi à une température de 130°C.

8. Procédé selon l'une des revendications 1 à 7, **caractérisé en ce que** le matériau synthétique thermoplastique utilisé est du polypropylène (PP).

9. Procédé selon l'une des revendications 1 à 8, **caractérisé en ce que** le matériau synthétique thermoplastique utilisé est du polyéthylène (PE), en particulier du polyéthylène à haute densité (PEHD).

10. Procédé selon l'une des revendications 1 à 9, **caractérisé en ce que** le matériau synthétique thermoplastique utilisé est du polychlorure de vinyle (PVC).

11. Procédé selon l'une des revendications 1 à 10, **caractérisé en ce que** le matériau synthétique thermoplastique utilisé est du nylon.

12. Procédé selon l'une des revendications 1 à 11, **caractérisé en ce que** le matériau synthétique thermoplastique utilisé est un copolymère d'acrylonitrile, butadiène et styrène (ABS).

13. Procédé selon l'une des revendications 1 à 12, **caractérisé en ce que** le matériau synthétique thermoplastique utilisé est du polylactide (PLA).

14. Procédé selon l'une des revendications 1 à 13, **caractérisé en ce que** la matière première contient de 20 à 80% en poids de fibres.

15. Procédé selon l'une des revendications 1 à 14, **caractérisé en ce que** la matière première contient de 40 à 60% en poids de fibres.

16. Procédé selon l'une des revendications 1 à 15, **caractérisé en ce que** le matériau fibreux utilisé est du bois sous forme de sciure ou de copeaux.

17. Procédé selon l'une des revendications 1 à 15, **caractérisé en ce que** le matériau fibreux utilisé est du chanvre.

18. Procédé selon l'une des revendications 1 à 16, **caractérisé en ce que** le matériau fibreux utilisé est de la paille.

19. Procédé selon l'une des revendications 1 à 17, **caractérisé en ce que** le matériau fibreux utilisé est de la ramie ou du kénaf.

20. Procédé selon l'une des revendications 1 à 19, **caractérisé en ce que** les pastilles sont refroidies dans un bain d'eau.
